# EUROPEAN PATENT APPLICATION

(11) **EP 4 800 525 A1**
(43) Date of publication of application: **02.09.2026**
(21) Application number: 26153499.4
(22) Date of filing: 22.01.2026
(51) Int. Cl.: G06F 1/16, G06F 1/3215, G06F 1/3234, G06F 1/3287, G06F 1/3293, G06F 3/01

(54) **REDUCING IMAGE CAPTURE LATENCY IN A HEAD-MOUNTED DEVICE**

(30) Priority: 26.02.2025 US 202563763536 P; 04.12.2025 US 202519408566
(71) Applicant: Apple Inc., Cupertino, CA 95014 (US)
(72) Inventor: GARDINER, Shannon, Cupertino, CA 95014 (US); JUVEKAR, Chiraag, Cupertino, CA 95014 (US); SANGHI, Karan, Cupertino, CA 95014 (US)
(74) Representative: Karl, Christof

(57) **Abstract**

An electronic device is provided that includes one or more image sensors, a first processing circuit configured to run an operating system for the electronic device, a second processing circuit configured to direct the one or more image sensors to capture an image, and a third processing circuit configured to detect a user input and to concurrently wake up the first and second processing circuits from a sleep state in response to detecting the user input. The image sensors can output the captured image to image signal processing (ISP) circuitry. The ISP circuitry can include computer vision processing (CVP) circuitry that receives the captured image and having subsystems operating in a first power domain and a back-end image signal processing pipeline operating in a second power domain different than the first power domain.

## Description

This application claims priority to U.S. patent application No. 19/408,566, filed December 4, 2025, and U.S. Provisional Patent Application No. 63/763,536, filed February 26, 2025, which are hereby incorporated by reference herein in their entireties.

### Field

This disclosure relates generally to electronic devices and, more particularly, to head-mounted devices with one or more cameras.

### Background

Some electronic devices can be mounted on a user's head. Such type of electronic devices can be referred to as head-mounted devices. A head-mounted device can include cameras for capturing images of the surrounding physical environment. It is within this context that the embodiments herein arise.

### Summary

An aspect of the disclosure provides a head-mounted device that includes one or more image sensors, a first processing circuit configured to run an operating system for the head-mounted device, a second processing circuit configured to direct the one or more image sensors to capture an image, and a third processing circuit configured to detect a user input and to concurrently wake up the first and second processing circuits from a sleep state in response to detecting the user input. The first processing circuit can be an application processor configured to run one or more applications with the operating system and is operable between the sleep state and a wake state. The third processor can be a processor that is continuously in the wake state. The second processing circuit can be operable between the sleep state and the wake state and can include a camera driver for controlling image signal processing (ISP) circuitry configured to receive and process the captured image output from the one or more image sensors.

An aspect of the disclosure provides a method of operating a head-mounted device having a first processor, a second processor, and a third processor. The method can include: with the third processor, detecting a user input; in response to detecting the user input, using the third processor to concurrently wake up the first processor and the second processor, where the first processor has a first wake time and where the second processor has a second wake time that is less than the first wake time; and in response to the second processor waking up from a sleep state to a wake state, using a camera driver running on the second processor to initiate image capture. The first processor can be operable between the sleep state and the wake state and consumes a first amount of power in the wake state; the second processor can consume a second amount of power in the wake state that is less than or equal to the first amount of power; and the third processor can consume a third amount of power that is less than the first amount of power.

An aspect of the disclosure provides an electronic device that includes a first processor on which an operating system of the electronic device is executed, a second processor on which a camera driver is executed, where the camera driver is configured to initiate image capture while the first processor is transitioning from a sleep state to a wake state, and a third processor configured to detect a user input, where the first processor is configured to transition from the sleep state to the wake state based on the second processor detecting the user input. The third processor can be configured to concurrently wake up the first processor and the second processor in response to detecting the user input. The electronic device can further include one or more cameras configured to capture images, image signal processing circuitry configured to receive the captured images and to output corresponding processed images, and memory configured to store the processed images. The image signal processing circuitry can include computer vision processing circuitry configured to receive the captured images and having a plurality of subsystems configured to operate in a first power domain and a back-end image signal processing pipeline coupled to the computer vision processing circuitry and configured to operate in a second power domain different than the first power domain.

### Brief Description of the Drawings

FIG. 1 is a diagram of an illustrative system having a transparent display in accordance with some embodiments.
FIG. 2 is a diagram showing illustrative hardware components that can be included within a system of the type shown in FIG. 1 in accordance with some embodiments.
FIG. 3 is a diagram showing how an illustrative system can include multiple processors for orchestrating a low-latency image capture in accordance with some embodiments.
FIG. 4 is a flowchart of illustrative steps for operating a system of the type shown in FIGS. 1-3 in accordance with some embodiments.

### Detailed Description

A physical environment can refer to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell.

In contrast, an extended reality (XR) environment refers to a wholly or partially simulated environment that people sense and/or interact with via an electronic device. For example, an XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics.

As one example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and, in response, adjust graphical content and an acoustic field presented to the person in a manner similar to how such views and sounds would change in a physical environment. In some situations (e.g., for accessibility reasons), the XR system may adjust characteristic(s) of graphical content in the XR environment in response to representations of physical motions (e.g., vocal commands).

There are many different types of electronic systems that enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head mountable system may have one or more speaker(s) and an integrated opaque display. Alternatively, a head mountable system may be configured to accept an external opaque display (e.g., a smartphone). The head mountable system may incorporate one or more imaging sensors to capture images or video of the physical environment, and/or one or more microphones to capture audio of the physical environment.

Rather than an opaque display, a head mountable system may have a transparent or translucent display. The transparent or translucent display may have a medium through which light representative of images is directed to a person's eyes. The display may utilize digital light projection, organic light-emitting diodes (OLEDs), LEDs, micro light-emitting diodes (uLEDs), liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to selectively become opaque. Projection-based systems may employ retinal projection technology that projects graphical images onto a person's retina. Projection systems also may be configured to project virtual objects into the physical environment, for example, as a hologram or on a physical surface. A display in device 10 is optional and can be omitted, if desired.

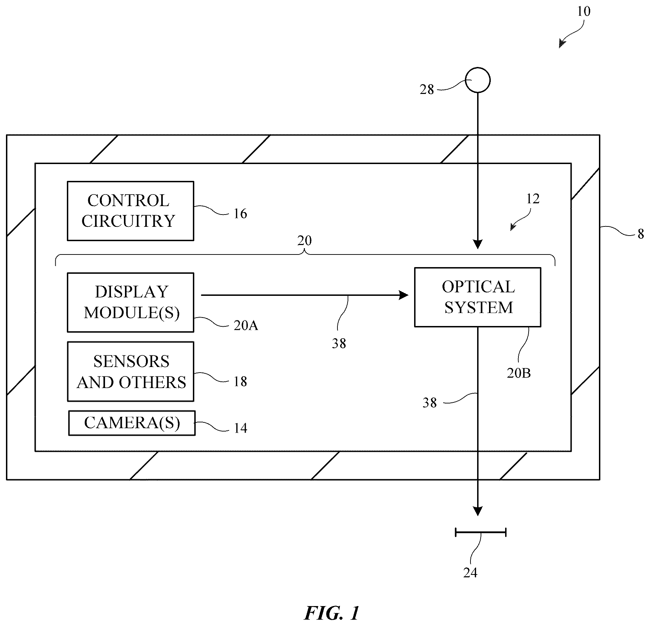

System 10 (sometimes referred to as electronic device 10, head-mounted device 10, etc.) of FIG. 1 may be a head-mounted device (HMD) having one or more displays. The displays in system 10 may include displays 20, sometimes referred to as near-eye displays, mounted within support structure (housing) 8. Support structure 8 may have the shape of a pair of eyeglasses or goggles (e.g., supporting frames), may form a housing having a helmet shape, or may have other configurations to help in mounting and securing the components of near-eye displays 20 on the head or near the eye of a user. Near-eye displays 20 may include one or more display modules such as display modules 20A and one or more optical systems such as optical systems 20B. Display modules 20A may be mounted in a support structure such as support structure 8. Each display module 20A may emit light 38 (image light) that is redirected towards a user's eyes at eye box 24 using an associated one of optical systems 20B. Displays 20 are optional and can be omitted from device 10.

The operation of system 10 may be controlled using control circuitry 16. Processing circuitry in control circuitry 16 may be used to control the operation of device 10. The processing circuitry may be based on one or more microprocessors, microcontrollers, digital signal processors, baseband processors, power management units, audio chips, application-specific integrated circuits, etc. Control circuitry 16 may be configured to perform operations in system 10 using hardware (e.g., dedicated hardware or circuitry), firmware, and/or software. Software code for performing operations in system 10 and other data can be stored on non-transitory computer readable storage media (e.g., tangible computer readable storage media) in control circuitry 16. The software code may sometimes be referred to as software, data, program instructions, instructions, or code. The non-transitory computer readable storage media (sometimes referred to generally as memory) may include non-volatile memory such as non-volatile random-access memory (NVRAM), one or more hard drives (e.g., magnetic drives or solid state drives), one or more removable flash drives or other removable media, or the like. Software stored on the non-transitory computer readable storage media may be executed on the processing circuitry of control circuitry 16. Control circuitry 16 having both storage circuitry and processing circuitry is sometimes referred to collectively as storage and processing circuitry.

System 10 may include input-output circuitry such as input-output devices 12. Input-output devices 12 may be used to allow data to be received by system 10 from external equipment (e.g., a tethered computer, a portable device such as a handheld device or laptop computer, or other electrical equipment) and to allow a user to provide head-mounted device 10 with user input. Input-output devices 12 may also be used to gather information on the environment in which system 10 (e.g., head-mounted device 10) is operating. Output components in devices 12 may allow system 10 to provide a user with output and may be used to communicate with external electrical equipment. Input-output devices 12 may include one or more cameras 14, sometimes referred to as image sensors. Cameras 14 may be used for gathering images of physical objects that are optionally digitally merged with virtual objects on a display in system 10. Input-output devices 12 may include sensors and other components 18 (e.g., accelerometers, gyroscopes, depth sensors, light sensors, haptic output devices, speakers, batteries, wireless communications circuits for communicating between system 10 and external electronic equipment, etc.).

Cameras 14 that are mounted on a front face of system 10 and that face outwardly (towards the front of system 10 and away from the user) may sometimes be referred to herein as outward-facing, external-facing, forward-facing, or front-facing cameras. Cameras 14 may capture visual odometry information, image information that is processed to locate objects in the user's field of view (e.g., so that virtual content can be registered appropriately relative to real-world objects), image content that is displayed in real time for a user of system 10, and/or other suitable image data. For example, outward-facing cameras may allow system 10 to monitor movement of the system 10 relative to the environment surrounding system 10 (e.g., the cameras may be used in forming a visual odometry system or part of a visual inertial odometry system). Outward-facing cameras may also be used to capture images of the environment that are displayed to a user of the system 10. If desired, images from multiple outward-facing cameras may be merged with each other and/or outward-facing camera content can be merged with computer-generated content for a user.

Display modules 20A may be liquid crystal displays, organic light-emitting diode displays, laser-based displays, or displays of other types. Optical systems 20B may form lenses that allow a viewer (see, e.g., a viewer's eyes at eye box 24) to view images on display(s) 20. There may be two optical systems 20B (e.g., for forming left and right lenses) associated with respective left and right eyes of the user. A single display 20 may produce images for both eyes or a pair of displays 20 may be used to display images. In configurations with multiple displays (e.g., left and right eye displays), the focal length and positions of the lenses formed by system 20B may be selected so that any gap present between the displays will not be visible to a user (e.g., so that the images of the left and right displays overlap or merge seamlessly).

If desired, optical system 20B may contain a transparent structure (e.g., an optical combiner, etc.) that allows image light from physical objects 28 to be combined optically with virtual (computer-generated) images such as virtual images in image light 38. Light from physical objects 28 in the physical environment or scene can sometimes be referred to and defined herein as world light, scene light, ambient light, external light, or environmental light. In this type of system, a user of system 10 may view both the physical environment around the user and computer-generated content that is overlaid on top of the physical environment. Cameras 14 may also be used in device 10 (e.g., in an arrangement in which a camera captures images of physical object 28 and this content is modified and presented as virtual content at optical system 20B).

System 10 may, if desired, include wireless circuitry and/or other circuitry to support communications with a computer or other external equipment (e.g., a computer that supplies display 20 with image content). During operation, control circuitry 16 may supply image content to display 20. The content may be remotely received (e.g., from a computer or other content source coupled to system 10) and/or may be generated by control circuitry 16 (e.g., text, other computer-generated content, etc.). The content that is supplied to display 20 by control circuitry 16 may be viewed by a viewer at eye box 24.

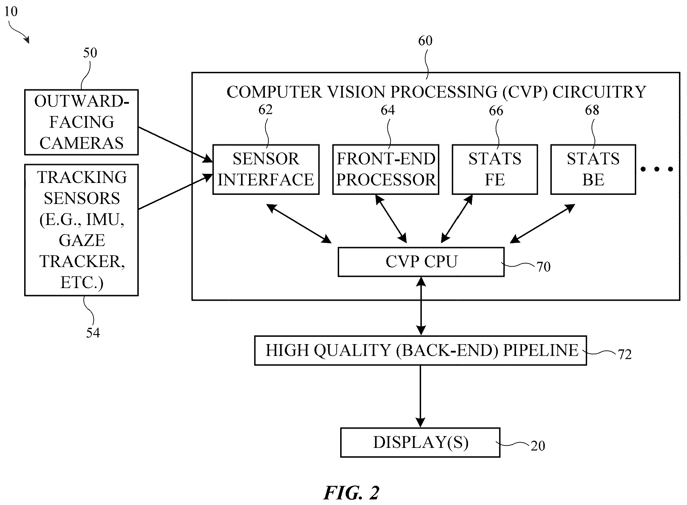

FIG. 2 is a diagram showing illustrative hardware components that can be included within a system (e.g., device 10) of the type described in connection with FIG. 1. As shown in FIG. 2, device 10 can include one or more hardware and/or software subsystems, including one or more outward-facing image sensing subsystems such as outward-facing cameras 50, one or more tracking subsystems such as tracking sensors 54, computer vision processing (CVP) circuitry such as CVP circuitry 60, a separate image signal processing pipeline such as high quality (back-end) pipeline 72, and one or more display(s) 20.

One or more cameras 50 can be used to gather information on the external real-world environment or scene surrounding device 10. Cameras 50 may include one or more of front-facing cameras 14 in FIG. 1. At least some of cameras 50 can be configured to capture one or more images of a scene, which can optionally be presented as a live video passthrough feed to the user using displays 20. Cameras 50 may include color image sensors and/or optionally monochrome (black and white) image sensors.

Cameras 50 can have different fields of view. Some cameras 50 can have a wide or ultrawide field of view, whereas some cameras 50 can have relatively narrower field of view. Not all of cameras 50 need to be used for capturing passthrough content. Some of the cameras 50 may be forward facing (e.g., oriented towards the scene in front of the user); some of the cameras 50 may be downward facing (e.g., oriented towards the user's torso, hands, or other parts of the user); some of the cameras 50 may be side/lateral facing (e.g., oriented towards the left and right sides of the user); and some of the cameras 50 can be oriented in other directions relative to the front face of device 10. All of these cameras 50 that are configured to gather information on the external physical environment surrounding device 10 are sometimes referred to and defined collectively as "external-facing" or "outward-facing" cameras.

Tracking sensors 54 can include a gaze tracking subsystem, sometime referred to as a gaze tracker, that is configured to gather gaze information or point-of-gaze information. The gaze tracker may employ one or more "inward-facing" camera(s) and/or other gaze-tracking components (e.g., eye-facing components and/or other light sources that emit beams of light so that reflections of the beams from a user's eyes may be detected) to monitor the user's eyes. One or more gaze-tracking sensor(s) 54 may face a user's eyes and may track a user's gaze. A camera in a gaze-tracking subsystem may determine the location of a user's eyes (e.g., the centers of the user's pupils), may determine the direction in which the user's eyes are oriented (the direction of the user's gaze), may determine the user's pupil size (e.g., so that light modulation and/or other optical parameters and/or the amount of gradualness with which one or more of these parameters is spatially adjusted and/or the area in which one or more of these optical parameters is adjusted based on the pupil size), may be used in monitoring the current focus of the lenses in the user's eyes (e.g., whether the user is focusing in the near field or far field, which may be used to assess whether a user is day dreaming or is thinking strategically or tactically), and/or other gaze information. Gaze tracking cameras may sometimes be referred to as inward-facing cameras, gaze-detection cameras, eye-tracking cameras, gaze-tracking cameras, or eye-monitoring cameras. If desired, other types of optical sensors (e.g., infrared and/or visible light-emitting diodes and light detectors, etc.) may also be used in monitoring a user's gaze.

Tracking sensors 54 can also include a face and body tracking subsystem configured to perform face tracking (e.g., to capture images of the user's jaw, mouth, etc. while the device is worn on the head of the user) and body tracking (e.g., by capturing images of the user's torso, arms, hands, legs, etc. while the device is worn on the head of user). If desired, the face and body tracking subsystem can also track a user's head pose by directly determining any movement, yaw, pitch, roll, etc. for head-mounted device 10. The yaw, roll, and pitch of the user's head may collectively define a user's "head pose." For example, tracking sensors 54 can include an inertial measurement unit (IMU). The inertial measurement unit can include one or more gyroscopes, gyrocompasses, accelerometers, magnetometers, other inertial sensors, and other position and motion sensors. These position and motion sensors may assume that head-mounted device 10 is mounted on the user's head. Therefore, references herein to head pose, head movement, yaw of the user's head (e.g., rotation around a vertical axis), pitch of the user's head (e.g., rotation around a side-to-side axis), roll of the user's head (e.g., rotation around a front-to-back axis), etc. may be considered interchangeable with references to device pose, device movement, yaw of the device, pitch of the device, roll of the device, etc. In certain embodiments, tracking sensors 54 may also include six degrees of freedom (DoF) tracking subsystems. Six DoF tracking subsystems or sensors can be used to monitor both rotational movement such as roll, pitch, and yaw and also positional/translational movement in a 3D environment.

Tracking sensors 54 can optionally further include a hands tracking subsystem, sometimes referred to as a hands tracker, configured to monitor a user's hand motion/gesture to obtain hand gestures data. For example, the hands tracker may include a camera and/or other gestures tracking components (e.g., outward facing components and/or light sources that emit beams of light so that reflections of the beams from a user's hand may be detected) to monitor the user's hand(s). One or more hands-tracking sensor(s) may be directed towards a user's hands and may track the motion associated with the user's hand(s), may determine whether the user is performing a tapping or swiping motion with his/her fingertips or hand(s), may determine whether the user is performing a non-contact button press or object selection operation with his/her hand(s), may determine whether the user is performing a grabbing or gripping motion with his/her hand(s), may determine whether the user is pointing at or pinching at a given object that is presented on display 20 using his/her hand(s) or fingers, may determine whether the user is performing a waving or bumping motion with his/her hand(s), or may generally measure/monitor three-dimensional non-contact gestures ("air gestures") associated with the user's hand(s). Tracking sensors 54 operable to obtain gaze, pose, hands gesture, and other information relating to a motion of a user of device 10 are sometimes referred to collectively as "user-tracking" sensors.

The example of FIG. 2 in which outward-facing cameras 50 and tracking sensors 54 (e.g., optical sensors employed to obtain gaze, pose, and/or other user-related data) are shown as separate independent subsystems is illustrative. In some embodiments, one or more of external-facing cameras 50 can also be employed to obtain pose information, location information, and/or other motion/position information associated with device 10. To help protect the privacy of users, any personal user information that is gathered by sensors may be handled using best practices. These best practices including meeting or exceeding any privacy regulations that are applicable. Opt-in and opt-out options and/or other options may be provided that allow users to control usage of their personal data.

Electronic device 10 can be configured to gather contextual information of the surrounding real-world (physical) environment or scene. Gathering contextual information can, for example, include identifying one or more objects of interest in the environment, detecting when the user has entered a particular room or environment, detecting when the user is engaging in a particular activity, detecting a current location of device 10, detecting a current user context or usage scenario (e.g., detecting if the user is currently watching a movie, playing a video game, or talking to another person or avatar), and/or determining other contextual information relating to the operation of device 10. Gathering contextual information may involve capturing one or more images using outward-facing cameras 50 and/or obtaining data from tracking sensors 54. Such images being captured for contextual purposes need not be output by displays 20 for human consumption. As such, the processing requirements and complexity for handling such images may be less than traditional image signal processing steps required for processing images that are being output by the displays for human consumption (viewing).

In accordance with an embodiment, image signal processing circuitry on device 10 can be segmented into a first portion that includes computer vision processing (CVP) circuitry 60 and a separate second portion that includes high quality (HQ) pipeline 72. In other words, CVP circuitry 60 and HQ pipeline 72 can sometimes collectively be referred to and defined herein as image signal processing (ISP) circuitry. Images and/or data output from sensors 50 and 54 that only need to be analyzed for contextual purposes may be processed using only CVP circuitry 60 (e.g., without being processed by the high quality pipeline 72), whereas images and/or data output from sensors 50 and 54 that will be output on displays 20 for human viewing may be processed by CVP circuitry 60 and high quality pipeline 72. Components within CVP circuitry 60 may be operated in a first power domain, whereas components within HQ pipeline 72 may be operated in a second power domain different from the first power domain (e.g., CVP circuitry 60 and HQ pipeline 72 may be configured to operate in different power domains).

Components in CVP circuitry 60 may generally operate in a lower power domain relative to the components in HQ pipeline 72. High quality pipeline 72 can be power gated (e.g., HQ pipeline 72 can be selectively activated and deactivated to reduce the overall power consumption). When processing images to be output on displays 20 for human consumption, high quality pipeline 72 may be selectively activated (e.g., powered on) to perform some or all of the image processing functions provided by HQ pipeline 72. When processing images for only contextual purposes (e.g., to support one or more computer vision algorithms running on device 10) without having to display such images, HQ pipeline 72 can be selectively deactivated (e.g., powered off or idled) to conserve power. In other words, CVP circuitry 60, when activated, consumes a first amount of power, whereas HQ pipeline 72, when activated, consumes a second amount of power greater than the first amount of power. Operating the image signal processing circuitry on device 10 in this way can be technically advantageous to minimize power consumption on device 10. Such reduced power operation can be beneficial for small, lightweight device 10 that might be powered by a battery for all-day usage.

As shown in FIG. 2, CVP circuitry 60 may include one or more hardware and/or software subsystems such as a sensor interface 62, a front-end (FE) processor 64, a statistics front-end (FE) processor 66, a statistics back-end (BE) processor 68, a central processing unit (CPU) such as computer vision processing (CVP) CPU 70, and/or other image signal processing components. Sensor interface 62 can be configured to receive images (e.g., raw pixel data) from cameras 50, tracking sensors 54, and/or other image sensors within device 10. Front-end processor 64 can be configured to perform bad/defective pixel correction, image scaling or binning operations, image cropping or resizing, and/or other front-end or image pre-processing operations. Statistics FE processor 66 may be configured to collect pixel statistical information such as minimum pixel values, maximum pixel values, average pixel values, color plane information (e.g., red, green, and blue color planes), color and/or brightness histograms, and other front-end image statistics. Statistics BE processor 68 may be configured to convert an image from the raw Bayer domain to a color image and can generate additional statistical information.

The color image output from statistics BE processor 68 may be provided to one or more downstream computer vision processing algorithms or tasks running on device 10 (e.g., processor 68 may output an image to one or more client processors). Statistics FE processor 66 and BE processor 68 may be referred to collectively as a CVP statistics pipeline. Although CVP circuitry 60 is shown as including a single instance of interface 62, processor 64, processor 66, and processor 68, CVP circuitry 60 can include multiple sensor interface blocks 62 for interfacing with multiple sensors, multiple front-end processors 64 for performing image pre-processing operations in parallel, multiple processors 66 for performing front-end statistical computations in parallel, and/or multiple processors 68 for performing back-end statistical computations in parallel. Computer vision processing CPU 70 can be configured to manage and coordinate the operations of blocks 62, 64, 66, and 68 for processing each incoming image frame.

Computer vision processing circuitry 60 primarily includes components for performing front-end image signal processing operations. Computer vision processing circuitry 60 is therefore sometimes referred to and defined herein as "front-end" image signal processing (ISP) circuitry. In contrast, HQ pipeline 72 primary includes components configured to perform back-end image signal processing operations. High quality pipeline 72 is therefore sometimes referred to and defined herein as "back-end" image signal processing (ISP) circuitry. High quality (back-end) pipeline 72 may be a more complex and higher-power-consuming version of the statistics back-end processor 68 of CVP circuitry 60. For example, HQ pipeline 72 may include components configured to perform bad/defective pixel correction, noise reduction, white balancing, demosaicing, color space conversion, tone mapping (e.g., including global and local tone mapping), color correction, gamma correction, shading correction, image sharpening, high dynamic range (HDR) correction, edge-aware local image adjustments, image fusion (e.g., fusing multiple image frames together for noise reduction and high dynamic range), image signal processing operations entirely absent from CVP circuitry 60, and/or other image signal processing functions to output a corresponding image for display.

Image(s) output by the back-end processor 68 of CVP circuitry 60 may be processed in accordance with a first set of image processing requirements that can optionally produce a lower fidelity (quality) image for computer vision consumption, whereas image(s) output by the HQ pipeline 72 may be processed in accordance with a second set of image processing requirements different than the first set of image processing requirements that can optionally produce a comparatively higher fidelity (quality) image to be displayed for human consumption. In some embodiments, the CVP circuitry 60 can be configured to output a processed image having a first quality and/or using a first amount of power, whereas HQ pipeline 72 can be configured to output a processed image having a second quality greater than the first quality and/or using a second amount of power greater than the first amount of power. In some embodiments, CVP circuitry 60 can be configured to output a processed image by performing a first set of image processing operations, whereas HQ pipeline 72 can be configured to output a processed image by performing additional image processing operations different than the first set of image processing operations. Images output by processor 68 can be provided as results to one or more client processors. The example of FIG. 2 in which HQ pipeline 72 can output content for human consumption via display(s) 20 is illustrative. Display 20 is optional and can be omitted from device 10. If desired, the content output from HQ pipeline 72 can be stored in memory for later processing.

In other types of mobile electronic devices such as a smartphone with a camera, a user typically opens a camera application and is presented with a preview of the image to be captured prior to pressing a capture button. In such scenarios, the smartphone can determine with a high likelihood that the user is about to press the capture button and can prepare itself for an image capture by preemptively waking up all the necessary hardware and/or software subsystems needed for an image capture.

In contrast to capturing an image on a smartphone, a user operating device 10 can initiate or trigger an image capture without necessarily opening up a camera (image capture) application. In other words, device 10 might not know a priori when the user will be pressing a capture button. Device 10, which as described above can be a lightweight head-mounted device with low power consumption for all-day usage, may include one or more processors at least some of which can be operated in a sleep mode to reduce active power consumption.

For example, device 10 can include an application processor on which an operating system of device 10 is executed. The application processor should be operated in the sleep mode most of the time to save power. Pressing a capture button, which can occur at any time based on a user's whim, may trigger the application processor to wake up. Waiting for the application processor to fully awake before allowing the camera to capture an image can, however, introduce substantial shutter lag. "Shutter lag" can refer to and be defined herein as the delay between pressing the capture (shutter) button and the moment the image is actually captured at the camera.

In accordance with an embodiment, a method of operating device 10 is provided that reduces shutter lag. Device 10 can leverage an always-on processor to monitor for a button press and in response to detecting the button press, wake up an application processor and, in-parallel with the application processor waking up, prepare the camera pipeline for an image capture even before the application processor is fully awake. For example, the camera pipeline can begin capturing one or more images and start processing the captured images before the application processor is ready to handle the images. The term "camera pipeline" or camera stack can refer to all subsystems that are involved in capturing one or more images, which can include at least the outward-facing cameras 50, computer vision processing circuitry 60, high quality pipeline 72, associated memory devices for storing the captured image(s), and a camera driver (e.g., a software subsystem configured to orchestrate the operations of the image signal processing circuitry).

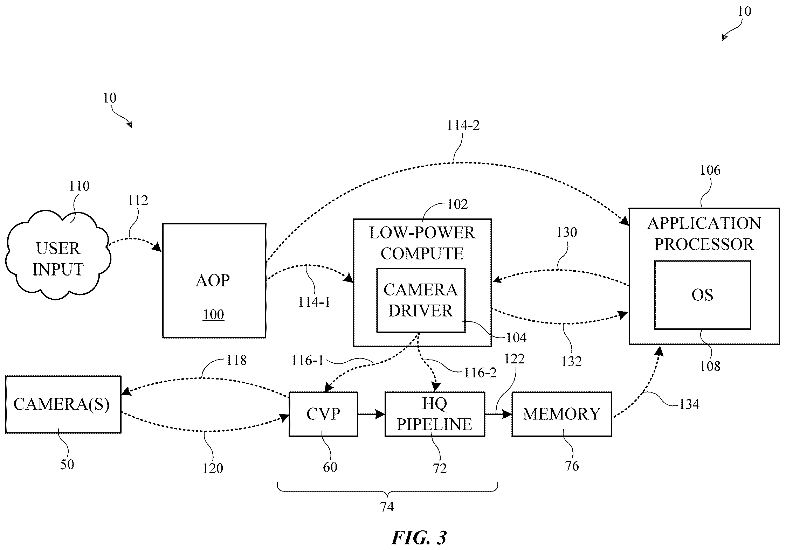

FIG. 3 is a diagram showing how device 10 can include multiple processors for orchestrating a low-latency image capture in accordance with some embodiments. As shown in FIG. 3, device 10 can include one or more camera(s) 50, computer vision processing circuitry 60, high quality pipeline 72, memory device 76, and one or more processing circuits such as processors 100, 102, and 106. Cameras 50 can be outward-facing image sensors configured to capture one or more images of a scene or physical environment. The captured images can be processed by computer vision processing (CVP) circuitry 60 and then by high quality pipeline 72. Computer vision processing circuitry 60 and high quality pipeline 72 can thus receive an incoming (raw) image and output a corresponding "processed" image. Computer vision processing circuitry 60 and high quality pipeline 72 configured to generate processed images are sometimes referred to collectively as image signal processing (ISP) circuitry 74. The processed images output from ISP circuitry 74 can be stored in memory 76. Memory device 76 can be part of a storage subsystem within control circuitry 16 (see FIG. 1). Memory device 76 can be implemented as volatile memory such as random-access memory (e.g., dynamic RAM or DRAM), non-volatile (persistent) memory such as flash memory, magnetic drives, optical drives, or solid state drives, or other types of storage devices.

Processor 106 may represent an application processor of device 10. Application processor 106 is sometimes referred to as application processing circuit 106. Application processor 106 may be configured to run or execute an operating system (OS) such as operating system 108 for device 10. Operating system 108 can be used to manage multiple applications running on device 10 such as allowing a user to switch between different applications (e.g., photo/video organization and editing applications, media streaming applications, gaming applications, social media applications, map/navigation applications, health and fitness applications, automated assistant applications, information searching applications, taxi hailing applications, online banking applications, etc.), to manage security features on device 10 such as performing biometric authentication for secure access and data encryption for safeguarding the user's data, and/or to manage productivity features such as a user's calendar, reminders, notes, and files, just to name a few. In general, operating system 108 can be designed to offer a secure and intuitive platform that prioritizes user experience, privacy, and seamless functionality across a wide variety of services and applications.

Application processor 106 that runs a full OS stack as described above can consume a substantial amount of power if kept active all the time. To help extend the battery life of device 10, application processor 106 can be configured in a sleep state when the applications running on device 10 are idle. Application processor 106 can thus toggle between the sleep state and a wake state. When one or more applications being managed by operating system 108 is needed or activated by the user, application processor 106 can wake up by transitioning from the sleep state to the wake state. The amount of time it takes for application processor 106 to transition from the sleep state to the wake state can sometimes be referred to herein as the application processor "wake time."

In contrast to application processor 106, processor 100 may always be powered on. For example, processor 100 may be a specialized, low-power processing subsystem designed to handle specific takes continuously without draining much battery power. Processor 100 remains active even when application processor 106 is in the sleep or idle state. Processor 100 operating at minimal power levels can be configured to handle lightweight tasks such as monitoring sensors (e.g., sensors 18 of FIG. 1, image sensors 50 and tracking sensors 54 of FIG. 2, and/or other sensors), monitoring voice commands (e.g., "Hey Siri" or other voice commands), managing notifications, and/or maintaining wireless connectivity for certain applications, just to name a few. Processor 100 of such type is sometimes referred to and defined herein as an "always-on" processor (AOP) or an "always-awake" processor. Always-on processor 100 is sometimes referred to as always-on processing circuit 100. Having an always-on processor 100 that is always (continuously or constantly) active as long as the battery is not completely drained ensures fast responses to user inputs or certain triggering events that would otherwise require the attention of processor 106 by eliminating the latency of waking up the main processor 106 (e.g., to bypass the application processor wake time). Offloading lightweight tasks from the main application processor 106 to always-on processor 100 is also technically advantageous and beneficial to help conserve energy while optimizing performance for the overall system 10.

Device 10 may further be provided with a low-power compute block such as low-power compute processor 102. Low-power compute processor 102 is sometimes referred to as low-power compute processing circuit 102. Low-power compute processor 102 may include a camera driver such as camera driver 104 configured to control the camera pipeline. Camera driver 104, sometimes referred to as an image sensor or image signal processing driver, is a software subsystem configured to orchestrate the operations of ISP circuitry 74. Processor 102 can directly access memory 76, which is sometimes referred to herein as an image storage circuit. Application processor 106 can access or retrieve stored images from memory 76 through low-power compute processor 102. Alternatively or additionally, application processor 106 can also directly access stored images on memory 76. Unlike processors 102 and 106, always-on processor 100 has no access to memory 76 (e.g., processor 100 should not be able to access the stored images). Processors 100, 102, and 106 configured to operate as such can be considered to have different memory access privileges. For instance, always-on processor 100 can have a first memory access privilege, application processor 106 may have a second memory access privilege that is equal to or greater than the first memory access privilege, and low-power compute processor 102 may have a third memory access privilege that is equal to or greater than the second memory access privilege.

Low-power compute processor 102 may be operable in a wake state or a sleep state. Processor 102 in the wake state may consume less power than application processor 106 in the wake state. Processor 102 in the wake state may consume more power than always-on processor 100. In general, application processor 106 may consume a first amount of power; low-power compute processor 102 may consume a second amount of power less than the first amount of power; and always-on processor may consume a third amount of power less than the second amount of power. In some embodiments, low-power compute processor 102 may consume a similar amount of power, when operated in the wake state, as always-on processor 100. While processor 102 can toggle between sleep (idle) and wake states, processor 100 is always active (e.g., processor 100 is always awake, but draining a small amount of power).

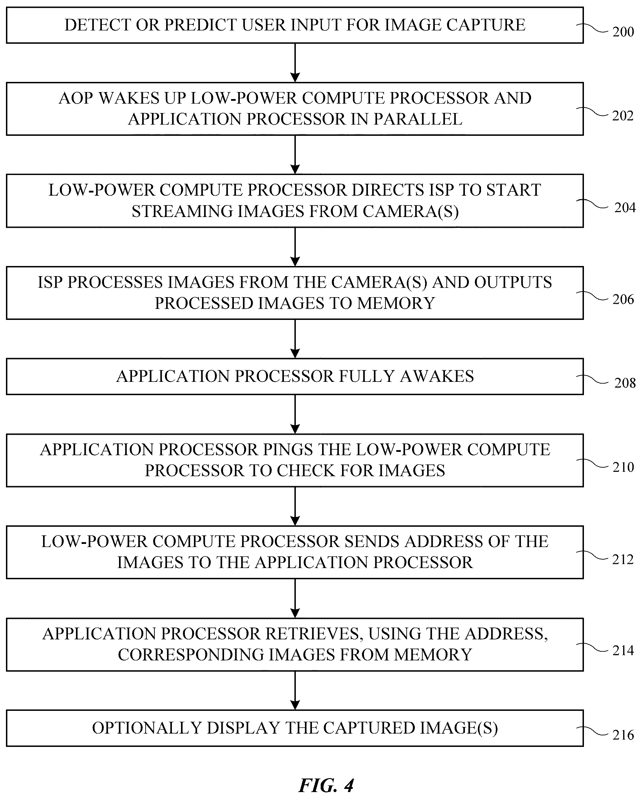

FIG. 4 is a flowchart of illustrative steps for operating device 10 of the type described in connection with FIGS. 1-3. During the operations of block 200, device 10 may detect or predict a user input for capturing an image. For example, always-on processor 100 can be configured to monitor a user input 110. User input 110 can be a button press (e.g., a user depressing or pushing a physical button on the housing or frame of device 10), a touch (e.g., a physical tap or pressure on a portion of the housing or frame of device 10), a voice command (e.g., asking Siri or other automated assistant to take a photo), a hand gesture (e.g., a gesture from the user's finger(s) or hand or other motion for triggering an image capture), and/or a remote trigger (e.g., using a remote controller that communicates wirelessly with device 10), just to name a few. In the examples above, such user input(s) 110 can be detected via a physical button, a virtual button, a touch sensor, a microphone, a motion sensor, or other types of sensors, which can then alert the always-on processor 100 of the user's intent to capture an image (as shown by arrow 112 in FIG. 3).

During the operations of block 202, the always-on processor 100 can be configured to wake up the low-power compute processor 102 (as shown by arrow 114-1 in FIG. 3) and concurrently wake up the application processor 106 (as shown by arrow 114-2 in FIG. 3). In other words, always-on processor 100 can wake up processor 102 and processor 106 from the sleep state in parallel. Prior to block 202, low-power processor 102 and application processor 106 may both be in the sleep (idle) state. After receiving a wake signal from processor 100, low-power compute processor 102 may begin waking up and transitioning to the wake (active) mode. Similarly, after receiving a wake signal from processor 100, application processor 106 may begin waking up and transitioning to the wake (active) mode.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

Application processor 106 may have a first wake time, whereas low-power compute processor 102 may have a second wake time that is less than the first wake time. In other words, the low-power compute processor 102 can wake up faster than the application processor 106. During the operations of block 204, processor 102 may fully transition to the wake state (before the application processor 106 transitions to the wake sate) and can then direct image signal processing circuitry 74 to begin streaming images from one or more camera(s) 50. To achieve this, camera driver 104 running on processor 102 can concurrently activate CVP circuitry 60 (as shown by arrow 116-1 in FIG. 3) and HQ pipeline 72 (as shown by arrow 116-2 in FIG. 3). Image signal processing circuitry 74 can then send a signal to camera 50 (as shown by arrow 118 in FIG. 3) which directs camera 50 to being capturing one or more images. The amount of time that has elapsed between the detection of the user input at block 200 and the actual image capture at block 204 is sometimes referred to and defined herein as "capture latency." Camera 50 can then output raw images to ISP circuitry 74, as shown by arrow 120 in FIG. 3.

Subsequent to receiving raw images from camera 50, CVP circuitry 60 can leverage at least some of its components such as statistics FE processor 66 and/or statistics BE processor 68 to perform camera adjustments including adjusting exposure (sometimes referred to as autoexposure), white balance (sometimes referred to as auto white balance), tone mapping, lens shading, lens correction, and/or other types of adjustments that can affect the final processed image. Using CVP circuitry 60 to begin analyzing the captured images and to perform operations such as autoexposure (AE) and auto white balance (AWB) can be technically advantageous and beneficial to obtain proper camera settings, enabling the overall camera pipeline to acquire properly exposed and more aesthetically pleasing images. The images processed by ISP circuitry 74 can be stored in memory 76, as shown by arrow 122 in FIG. 3 (see also operations of block 206 in FIG. 4).

At block 208, application processor 106 may fully awake (e.g., processor 106 finishes transitioning to the awake state). At this point, the main operating system 108 running on processor 106 may be fully operational and ready to handle desired tasks and workloads. Once application processor 106 is active, application processor 106 can be configured to immediately ping the low-power compute processor 102 to check for images (see operations of block 210). As illustrated by arrow 130 in FIG. 3, application processor 106 can output one or more pings to low-power compute processor 102 for retrieving or requesting one or more images from memory 76. Such pings output from application processor 106 are sometimes referred to as image requests.

During the operations of block 212, low-power compute processor 102 can send an address of the image(s) stored in memory 76 during block 206 in response to the image request pings, as shown by arrow 132 in FIG. 3. During the operations of block 214, application processor 106 can, using the address received from processor 102, access the corresponding images from memory 76 (e.g., memory 76 can output stored images to processor 106, as shown by arrow 134 in FIG. 3). This example in which the application processor 106 retrieves address information from low-power compute processor 102 and then uses the retrieved address information to access memory 76 is illustrative. In other embodiments, in response to receiving pings 130 from application processor 106, low-power compute processor 102 can retrieve the stored images from memory 76 and then forward the retrieved messages to application processor 106. If desired, other ways of retrieving and conveying the captured images to application processor 106 can be employed.

During the operations of block 216, device 10 can optionally display the captured images using displays 20 shown in FIG. 1. For example, application processor 106 can receive one or more captured images from memory 76 and then convey the captured image(s) to displays 20 for output. If desired, the captured image(s) can be stored in memory 76 for later (downstream) processing and/or can be conveyed to other external devices or to the cloud for online storage. Operating device 10 to capture an image, process the captured image, and then storing the processed image (and optionally displaying the stored image) in this way may be technically advantageous and beneficial to minimize shutter lag. The reduction of shutter lag can be achieved by using the always-on processor 100 to concurrently wake up application processor 106 and low-power compute processor 102, which preemptively kickstarts the image capture process even before processor 106 is fully awake. Displaying the captured image(s) locally at device 10 is exemplary. If desired, one or more images captured using the operations of FIG. 4 can be shared or otherwise transmitted to other computing devices (e.g., smartphones, tablets, laptop computers, desktop computers, wristwatches, other head-mounted devices, etc.) and viewed on the other computing devices.

The operations of FIG. 4 are illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

In accordance with an embodiment, a head-mounted device includes one or more image sensors, a first processing circuit configured to run an operating system for the head-mounted device, a second processing circuit configured to direct the one or more image sensors to capture an image, and a third processing circuit configured to detect a user input and to concurrently wake up the first and second processing circuits from a sleep state in response to detecting the user input.

In accordance with another embodiment, the first processing circuit optionally includes an application processor configured to run one or more applications with the operating system and is operable between the sleep state and a wake state.

In accordance with another embodiment, the third processing circuit optionally includes a processor that is continuously in the wake state.

In accordance with another embodiment, the head-mounted device optionally further includes image signal processing (ISP) circuitry configured to receive and process the captured image output from the one or more image sensors, where the second processing circuit is operable between the sleep state and the wake state and includes a camera driver for controlling the image signal processing circuitry.

In accordance with another embodiment, the first processing circuit consumes a first amount of power in the wake state, the second processing circuit optionally consumes a second amount of power in the wake state that is less than or equal to the first amount of power, and the third processing circuit optionally consumes a third amount of power that is less than the first amount of power.

In accordance with another embodiment, the image signal processing circuitry optionally includes: computer vision processing circuitry configured to receive the captured image and having a plurality of subsystems configured to operate in a first power domain; and a back-end image signal processing pipeline coupled to the computer vision processing circuitry and configured to operate in a second power domain different than the first power domain.

In accordance with another embodiment, the head-mounted device optionally further includes a memory device configured to receive and store a processed image output from the back-end image signal processing pipeline, where the second processing circuit is operable to access the memory device and where the third processing circuit cannot access the memory device.

In accordance with another embodiment, the second processing circuit is optionally configured to direct the one or more image sensors to start capturing the image in response to waking up from the sleep state to the wake state.

In accordance with another embodiment, the first processing circuit is optionally further configured to ping the second processing circuit for the captured image in response to waking up from the sleep state to the wake state.

In accordance with another embodiment, the head-mounted device optionally further includes one or more displays configured to display the captured image subsequent to the first processing circuit pinging the second processing circuit for the captured image and conveying the captured image to the one or more displays.

In accordance with an embodiment, a method of operating a head-mounted device having a first processor, a second processor, and a third processor includes: with the third processor, detecting a user input; in response to detecting the user input, using the third processor to concurrently wake up the first processor and the second processor, where the first processor has a first wake time and where the second processor has a second wake time that is less than the first wake time; and in response to the second processor waking up from a sleep state to a wake state, using a camera driver running on the second processor to initiate an image capture.

In accordance with another embodiment, the first processor is optionally operable between the sleep state and the wake state and consumes a first amount of power in the wake state, the second processor optionally consumes a second amount of power in the wake state that is less than or equal to the first amount of power, and the third processor optionally consumes a third amount of power that is less than the first amount of power.

In accordance with another embodiment, using the camera driver running on the second processor to initiate the image capture optionally includes: activating image signal processing circuitry; directing one or more image sensors to start capturing images and outputting the captured images to the image signal processing circuitry; and with the image signal processing circuitry, outputting processed images to a memory device.

In accordance with another embodiment, the method optionally further includes using the first processor to send a request to the second processor to retrieve images from the memory device in response to the first processor waking up from the sleep state to the wake state.

In accordance with another embodiment, the method optionally further includes: with the second processor, sending address information to the first processor in response to receiving the request from the first processor; and with the first processor, using the address information obtained from the second processor to access the memory device.

In accordance with an embodiment, an electronic device includes: a first processor on which an operating system of the electronic device is executed; a second processor on which a camera driver is executed, where the camera driver is configured to initiate an image capture while the first processor is transitioning from a sleep state to a wake state; and a third processor configured to detect a user input, where the first processor is configured to transition from the sleep state to the wake state based on the second processor detecting the user input.

In accordance with another embodiment, the third processor is optionally configured to concurrently wake up the first processor and the second processor in response to detecting the user input.

In accordance with another embodiment, the electronic device optionally further includes one or more cameras configured to capture images, image signal processing circuitry configured to receive the captured images and to output corresponding processed images, and memory configured to store the processed images.

In accordance with another embodiment, the image signal processing circuitry optionally includes computer vision processing circuitry configured to receive the captured images and having a plurality of subsystems configured to operate in a first power domain and a back-end image signal processing pipeline coupled to the computer vision processing circuitry and configured to operate in a second power domain different than the first power domain.

In accordance with another embodiment, the first processor is optionally configured to send an image request to the second processor in response to transitioning to the wake state, and the second processor is optionally configured to respond to the image request by sending address information associated with the stored images in the memory to the first processor.

The foregoing is merely illustrative and various modifications can be made to the described embodiments. The foregoing embodiments may be implemented individually or in any combination.

## Claims

1. A head-mounted device comprising:
one or more image sensors;
a first processing circuit configured to run an operating system for the head-mounted device;
a second processing circuit configured to direct the one or more image sensors to capture an image; and
a third processing circuit configured to detect a user input and to concurrently wake up the first and second processing circuits from a sleep state in response to detecting the user input.

2. The head-mounted device of claim 1, wherein the first processing circuit comprises an application processor configured to run one or more applications with the operating system and is operable between the sleep state and a wake state.

3. The head-mounted device of claim 2, wherein the third processing circuit comprises a processor that is continuously in the wake state.

4. The head-mounted device of claim 2, further comprising:
image signal processing (ISP) circuitry configured to receive and process the captured image output from the one or more image sensors, wherein the second processing circuit is operable between the sleep state and the wake state and comprises a camera driver for controlling the image signal processing circuitry.

5. The head-mounted device of claim 4, wherein:
the first processing circuit consumes a first amount of power in the wake state;
the second processing circuit consumes a second amount of power in the wake state that is less than or equal to the first amount of power; and
the third processing circuit consumes a third amount of power that is less than the first amount of power.

6. The head-mounted device of claim 4, wherein the image signal processing circuitry comprises:
computer vision processing circuitry configured to receive the captured image and having a plurality of subsystems configured to operate in a first power domain; and
a back-end image signal processing pipeline coupled to the computer vision processing circuitry and configured to operate in a second power domain different than the first power domain.

7. The head-mounted device of claim 6, further comprising:
a memory device configured to receive and store a processed image output from the back-end image signal processing pipeline, wherein the second processing circuit is operable to access the memory device and wherein the third processing circuit cannot access the memory device.

8. The head-mounted device of claim 4, wherein the second processing circuit is configured to direct the one or more image sensors to start capturing the image in response to waking up from the sleep state to the wake state.

9. The head-mounted device of claim 4, wherein the first processing circuit is further configured to ping the second processing circuit for the captured image in response to waking up from the sleep state to the wake state.

10. The head-mounted device of claim 9, further comprising:
one or more displays configured to display the captured image subsequent to the first processing circuit pinging the second processing circuit for the captured image and conveying the captured image to the one or more displays.

11. A method of operating a head-mounted device having a first processor, a second processor, and a third processor, the method comprising:
with the third processor, detecting a user input;
in response to detecting the user input, using the third processor to concurrently wake up the first processor and the second processor, wherein the first processor has a first wake time and wherein the second processor has a second wake time that is less than the first wake time; and
in response to the second processor waking up from a sleep state to a wake state, using a camera driver running on the second processor to initiate an image capture.

12. The method of claim 11, wherein:
the first processor is operable between the sleep state and the wake state and consumes a first amount of power in the wake state;
the second processor consumes a second amount of power in the wake state that is less than or equal to the first amount of power; and
the third processor consumes a third amount of power that is less than the first amount of power.

13. The method of claim 11, wherein using the camera driver running on the second processor to initiate the image capture comprises:
activating image signal processing circuitry;
directing one or more image sensors to start capturing images and outputting the captured images to the image signal processing circuitry; and
with the image signal processing circuitry, outputting processed images to a memory device.

14. The method of claim 13, further comprising:
in response to the first processor waking up from the sleep state to the wake state, using the first processor to send a request to the second processor to retrieve images from the memory device.

15. The method of claim 14, further comprising:
with the second processor, sending address information to the first processor in response to receiving the request from the first processor; and
with the first processor, using the address information obtained from the second processor to access the memory device.
